# EUROPEAN PATENT SPECIFICATION

(11) **EP 2 496 100 B1**
(45) Date of publication and mention of the grant of the patent: **06.11.2013**
(21) Application number: 10790589.5
(22) Date of filing: 28.10.2010
(51) Int. Cl.: A23N 12/08, A23N 12/12, A23F 5/04

(54) **A ROASTING PLANT WITH GAS RECUPERATION BY OXIDATION**
EINE RÖSTVORRICHTUNG MIT GASREKUPERIERUNG MITTELS OXIDATION
DISPOSITIF DE TORRÉFACTION AVEC RÉCUPÉRATION DE GAZ PAR OXIDATION

(30) Priority: 04.11.2009 IT RE20090108
(43) Date of publication of application: 12.09.2012
(73) Proprietor: Petroncini Impianti S.p.A., 41124 Modena (IT)
(72) Inventor: FARINA, Stefano, 40141 Bologna (IT)
(74) Representative: Corradini, Corrado
(86) International application number: PCT/IB2010/002797
(87) International publication number: WO 2011/055212

(56) References cited:
- DE-A1- 2 354 780
- DE-B3-102004 038 730
- FR-A- 1 086 506
- FR-A- 1 473 109
- US-A- 2 159 027
- US-A- 3 841 826

## Description

### Technical Field

The invention relates to roasting plants in general, and to coffee-toasting plants in particular.

### Background Art

Roasting is a heat treatment to which some products are subjected, such as coffee, barley, cocoa, oil seeds and the like, in order to obtain a product which can subsequently be subjected to further work operations in order to adapt it for consumption.

The time spent at temperature and the process temperature itself are correlated and well known to experts in the field.

The following will make special reference to coffee roasting, though it is understood that it also relates to other products.

Coffee roasting is done by subjecting the mass of the product, possibly while it is also being turned and mixed, to a flow of combustion gases generated in a combustion chamber by a combustible gas burner or liquid diluted in air.

The hot gases will be referred to herein below as the roasting gases.

The mass of product subjected to the hot-gas action in turn issues gases which add to the roasting gases and which contain substances considered unsuitable for issuing into the atmosphere.

Gases that are not completely oxidised, which are issued into the atmosphere will herein below be termed discharge gases.

With ecological norms and standards becoming progressively more demanding in almost all countries, discharge of these non-perfectly-oxidised gases into the atmosphere is prohibited.

Experts in the field know that in order to obtain complete oxidation of the roasting gases, they must be brought to a temperature of about 800°C in the presence of sufficient oxygen.

The roasting process is done at temperatures comprised between 300°C and 500°C, and thus emits non-oxidised gases.

Performing roasting treatment at a temperature of close to or above 800°C, much higher than the temperature required for roasting which is about 500°C, is not possible as the product would be irremediably damaged.

Further, the whole process would take place at a much higher temperature than what is strictly necessary, with a considerable quantity of heat being unleashed into the atmosphere.

In the prior art, the treatment is performed at the minimum possible temperature, generally less than 500°C, and the discharge gas is subjected to an oxidising process before it is issued into the atmosphere.

In this case dissipation of the heat treatment is substantially reduced, but the presence of organic substances in the discharge gases make the use of purifying plants necessary, the installation and management costs of which are of relevant entity.

Purifying plants are destined to oxidise the toxic substances present in the roasting discharge gases, reducing the concentration thereof, expressed in totally organic carbon, below the limits allowed by law.

Known roasting plants exhibit a very simple lay-out.

Open-cycle plants exist which comprise a roasting chamber, of known characteristics, in which a certain quantity of coffee is kept in motion.

Gases generated in a combustion chamber by a combustible burner, the combustible generally being methane gas CH₄ or butane/propane gas, or liquid gas, generally diesel, after mixing with possibly preheated air are directed to the roasting chamber.

The gases, known as roasting gases, pass through the roasting chamber and are directly discharged into the atmosphere through a chimney, after first passing through a cyclone device to separate the solid particles.

As the roasting gas temperature is lower than 760-820°C, the discharge gases have to be filtered to reduce the total organic carbon. The filtering takes place in an oxidiser device of known type located before the chimney.

Semi-open cycle plants are known, in which the gases that have crossed the roasting chamber, after possible separation of the solid particles, are recycled to the combustion chamber.

In these plants the gases in outlet from the combustion chamber are in part sent to the roasting chamber and in part sent to the chimney for discharging into the atmosphere.

In this case too, since the roasting gas temperature is lower than 760-820°C, the gases are filtered to reduce the total organic carbon.

All the known roasting plants thus exhibit problems of an energetic nature, rising from the large mass of hot gases discharged into the atmosphere.

A plant according to the preamble of claim 1 is described in patent DE 10 2004 038730, or US 2 159 027 or DE 23 54 780, which discloses that a small quantity of non-purified gases can be directed to the chimney during the transitory stages of functioning of the means for reducing the organic components.

### Disclosure of Invention

The invention resolves the problem of energy recycling with the use of a plant and a process the characteristics of which are recited in the independent claims.

According to the invention, the discharge gas filtering is done by using a post-combustion heat-exchanger internally of which the gases reach temperatures of above 760-820°C, which temperatures guarantee an almost-total elimination of the total organic carbon, enabling the roasting temperature to be kept to the strictly necessary values in the order of 300-500°C variable during the cycle. The discharge gas treatment process in the post-combustor is a substantially-exothermic oxidising process, and only requires ignition in order to auto-burn due to the heat developed by gas oxidation.

The gases exiting from the post-combustor are in part discharged into the atmosphere through a usual chimney, and in part are recycled to the combustion chamber where they mix with the combustion gas of the burner present therein.

### Brief description of the Drawings

The advantages and constructional and functional characteristics of the invention are obvious from the detailed description that follows which, with the aid of the accompanying figures of the drawings, illustrates a preferred though non-limiting embodiment purely by way of example.
Figure 1 is a diagram of the invention.
Figure 2 schematically illustrates the gas filtering device.
Figure 3 is section III-III of figure 2.
Figure 4 is a diagram of a second embodiment of the plant according to the invention.

### Best Mode for Carrying Out the Invention

The roasting chamber 1 illustrated in the figures is of a generally known type (rotary roasting chamber, fluid bed, centrifuging etc.) in which a certain quantity of product to be treated is inserted.

A conduit 20 is connected to the chamber 1, which conduit 20 collects the roasting gases exiting from the combustion chamber 2 in which a burner 3 of methane gas CH₄ is present, supplied autonomously by comburent air conveyor means 31 and combustible conveyor means 32.

A branch 21 is present on the conduit 20, provided with a valve 22 for injection of fresh air if required.

A discharge conduit 4 for the discharge air leaves from the roasting chamber 1; the discharge conduit 4 terminating in a cyclone separator 5.

A ventilator 41 is located on the discharge conduit 4 between the cyclone separator 5 and the roasting chamber 1, which ventilator 41 places the roasting chamber in depression.

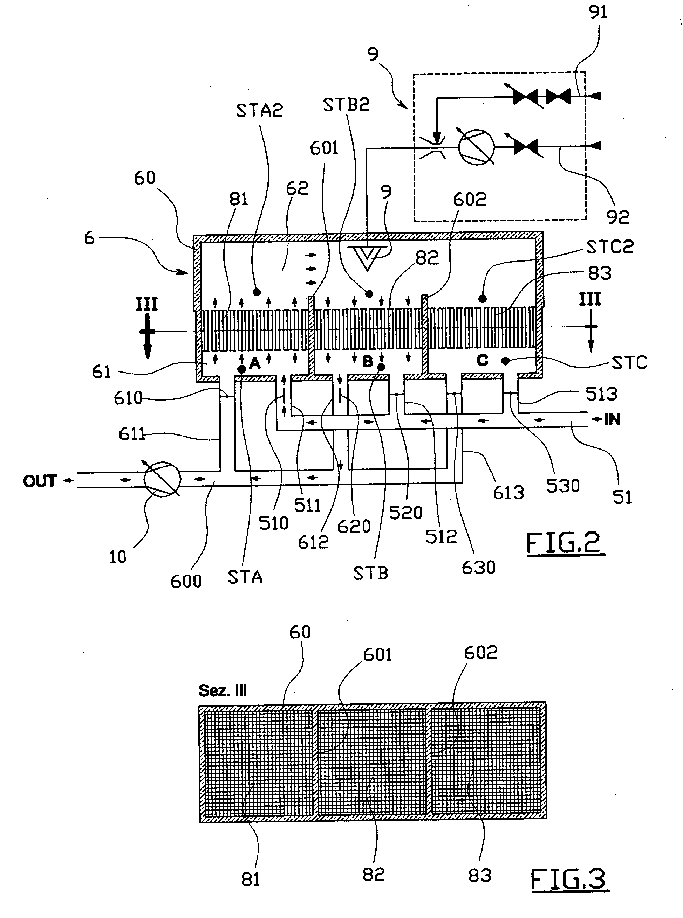

The cyclone separator 5 retains the solid particles present in the discharge gas and sends the particles to the filter device 6, better illustrated in figure 2.

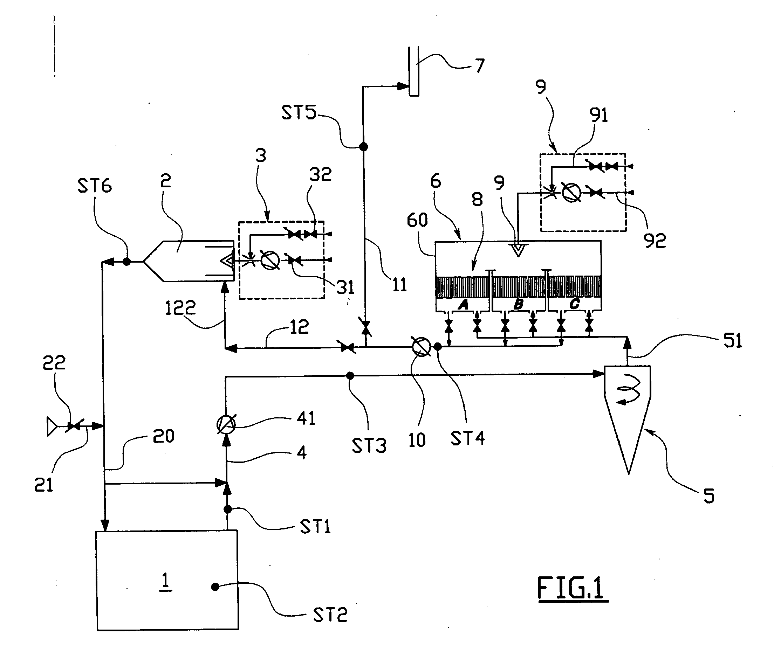

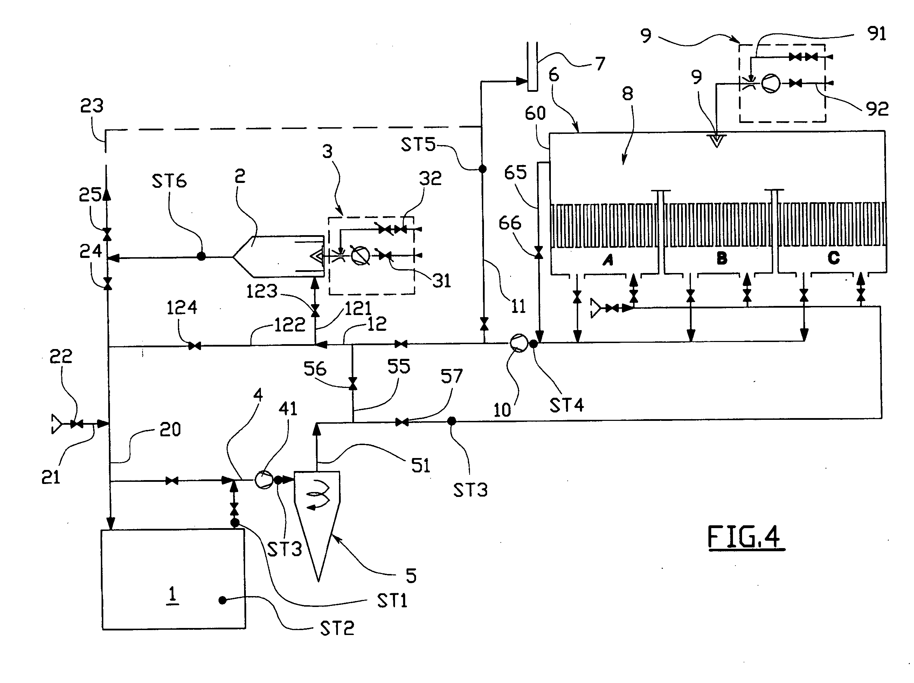

The gases exiting from the filter device 6 are in part sent to the chimney 7 and are partly recycled in the roasting chamber 1, for example via the combustion chamber 2 (figures 1-3), or directly in it (figure 4) as will be more fully described herein below.

With reference to figures 2 and figure 3 the filter 6 comprises an insulating casing 60 in which a porous ceramic mass 60 is located, such as a ceramic honeycomb filter 8, which delimits an upper zone 62 internally of the casing. The upper zone 62 comprises a burner 9 provided with fuel supply means 91 and comburent air supply means 92.

The lower zone 61 of the casing 60 comprises two vertical separator walls 601 and 602, which sub-divide the lower part into three separate chambers A, B and C, each of which contains a portion of the ceramic mass 8, respectively 81, 82 and 83.

A gas inlet conduit, 511, 512 and 513 terminates in each of the chambers A, B and C, which originates from the conduit 51 coming from the cyclone 5.

Each of the conduits comprises a check valve 510, 520 and 530.

A gas outlet conduit terminates in each of the chambers A, B and C, respectively 611, 612 and 613, which leads to the common discharge gas manifold 600.

Each of the conduits comprises a check valve 610, 620 and 630.

The mass is preferably in a honeycomb beehive shape.

The walls of the honeycomb have a thickness such as to guarantee a ratio between empty and full which is comprised between 95% and 140%.

The overall volume of the honeycomb will advantageously be comprised between 5% and 15% of the overall volume of the gas to be filtered by the organic substances for each minute of operation.

A conduit 600 leaves from the manifold which conduit 600 comprises an aspirator 10, such that there is always a slight depression internally of the casing 60.

Two conduits 11 and 12 branch off downstream of the aspirator 10; one of the conduits 11 flows into the chimney 7 and the other of the conduits 12 is connected to the roasting chamber 1 (either via the combustion chamber 2 or directly.

In the first embodiment, illustrated in detail in the diagram of figure 1, the conduit 12 is connected directly to the combustion chamber 2. In the following an embodiment is shown by way of example of a plant according to the first embodiment.

### Example 1.

A roasting plant as in the diagram of figure 1 comprises a rotary drum roasting chamber 1 having a horizontal axis, a diameter of 1650 mm and an axial length of 1800 mm.

600 Kg of coffee to be roasted is introduced into the drum.

The filter 6 exhibits a casing 60 having internal dimensions of 4800 mm x 1600 mm x 4200 mm, giving a total volume of about 32 m³.

The ceramic mass 8 made up of three ceramic honeycombs 81, 82 and 83 is located in the casing: the honeycombs 81, 82 and 83 comprise adjacent channels and each has dimensions, measured in the perpendicular plane, of 1600 mm x 1600 mm after deducing the thickness of the separating walls 601 and 602, and a dimension in the channel direction of 1900 mm.

The mass of each honeycomb is 4850 Kg, giving a total ceramic mass of 14550 Kg.

The honeycomb exhibits a plurality of channels having rectangular or hexagonal section, which are adjacent and have an empty-to-full ratio of 135%.

The upper portion 62 which functions as a combustion chamber exhibits dimensions of 4800 mm x 1500 mm x 1600 mm.

A methane gas burner 9 is located in the portion 62, having a capacity of 270 kW with an average consumption of 20 Nm³/h of methane.

The aspirator 10 located downstream of the filter 6 has a flow rate of close to 10m000 m³/h and a residual head of 35 mmH₂0, net of the load loss in the filter. A methane gas burner 3 is located in the combustion chamber 2 having a capacity of 750 kW with an average consumption of 25 Nm³/h.

The plant further comprises temperature sensors, and precisely:
ST1 located at the outlet of the roasting chamber 1;
ST2 located in the roasting chamber;
ST3 located at the inlet of the separator 5;
ST4 located at the outlet of the filter 6;
ST5 located at the inlet of the chimney;
ST6 located at the outlet of the combustion chamber 2;
STA, STE and STC located respectively in the chambers A, B and C (figure 2);
STA2, STB2 and STC3 located in the chamber 62 respectively above the ceramic masses 81, 82 and 83 (figure 2).

In a second embodiment, shown in the plant diagram of figure 4, the roasting plant comprises, apart from what has already been described for the first embodiment, a further conduit 65 in outlet from the upper zone 62 of the casing 60 and provided with a valve for opening and closing it. The conduit 65 is such as to cause a part of the combustion gas present in the upper zone 62 to flow into the manifold, 600, for example upstream of the aspirator.

The conduit 65 is destined to take hot gases, deriving from the mixture of the discharge gases filtered from one of the chambers A, B, C and the combustion gases in arrival from the second burner, intot he manifold 600 in order to head and heat, by mixing, the gases issuing from the filter 6, which have a temperature of 350-400°C or less, up to a temperature comprised between 300°C, sufficient for the roasting process.

In the second embodiment, the discharge gases aspirated from the aspirator 10 (i.e. which derive from the manifold 600 and the conduit 65) are made to flow together in part into the chimney 7 and in part directly and preferably into the roasting chamber 1.

The conduit 12 downstream of the aspirator 10 comprises two branches 121 and 122, provided with respective valve bodies 123 and 124 that are selectively openable and closable. The first branch 121 flows intot he combustion chamber 2 for the functioning of the plant, as in the first embodiment, should the valve 66 remain closed; the second branch 122, on the other hand, flows into the conduit 20 which supplied the gas directly into the roasting chamber 1 when the valves 66 and 124 are opened and the valve body 123 is closed.

Further, the plant comprises a safety system such as to by-pass the filter 6 should faults be detected therein or if operations are required thereto which interrupt use thereof.

This safety system comprises a by-pass branch 55, which is provided with a relative check valve 56, which communicates with the conduit 51 downstream of the cyclone separator 5, and is such as to flow into the conduit 2 upstream of the branches 121 and 122 thereof.

A further check valve 57 is located downstream of the by-pass branch 55 on the conduit 51, which further check valve 57 is destined to open/close the conduit 51 at the closure/opening of the check valve 56.

In this way the gas exiting the cyclone separate 5 can be made to flow into the combustion chamber 2 and therefrom to the chimney, via a conduit 23 deriving from the conduit 20 in outlet from the combustion chamber.

In particular, a valve 24 is located downstream of the combustion chamber 24 on the conduit 20, the valve 24 being downstream of the branching with the conduit 23, on which conduit 23 a respective valve 25 is located. The selective opening and closing of the valves 24 and 25 is such as to cause the gases exiting the combustion chamber 2 to flow into the roasting chamber 1 or the chimney 7, according to the plant requirements.

### FUNCTIONING.

Firstly a preheating cycle is performed, in which the burners 3 and 9 and the ventilators 41 and 10 are activated.

The outlet valves 610 and 630 from the chambers A and C are then closed, as well as the inlet valves 520 and 530 into chambers B and C, while the inlet valve 510 to the chamber A and the outlet valve 620 from the chamber B are left open.

The gas in arrival from the roasting chamber 1 enters chamber A, crosses the ceramic mass 81, mixes with the combustion gases of the burner 9 in the upper chamber 62, crosses the ceramic mass 82, passes into the chamber B and is aspirated by the ventilator 10.

When the chamber B has reached the desired temperature of 350-400°C, the valves 610 and 530 are closed and the valves 520 and 630 are opened; the hot gas coming from the drum 1 crosses the mass 82, previously heated, mixes with the burner 9 combustion gas and heats the ceramic mass 83 and passes into the chamber C up until the said chamber C is brought to the desired temperature of 350-400°C.

Once the mass 83 has been heated, the valves 630 and 520 are closed and valves 610 and 530 are opened; the gas in arrival from the roasting chamber 1 thus crosses the hot ceramic mass 83, mixes with the burner 9 combustion gas and crosses the ceramic mass 81 aspirated by the ventilator 10.

The cycle repeats up to when a temperature of about 200°C is reached internally of the roasting chamber 1.

At this point 600 Kg, for example, of coffee is loaded into the roasting chamber 1 and roasting begins.

At the start of the cycle the roasting gases are at a temperature of about 500°C and at a flow rate, expressed in m³/min, of between 5% and 55% of the mass of the product to be roasted.

Since the temperature of the gases exiting from the filter 6 is 350-400°C, a further heating operation in the combustion chamber is required to bring them up to 500°C, which in the first embodiment will happen in the combustion chamber 2 and in the second embodiment will be achieved by mixing with the combustion gases deriving from the upper zone 62 by means of the conduit 65. During the process, the average temperature of the coffee is gradually brought to about 200-230°C over a time comprised between 8-20 minutes, both variable according to the type of process desired. During the roasting cycle, the temperature of the gas entering the roasting chamber 1 must fall from 500°C to less than 300°C; in order to obtain this reduction, the power of the burner 3 must be progressively reduced up to being extinguished completely, and then cold air is injected from the branch 22.

The discharge gases from the drum have a temperature of about 150-300°C and are sent to the filter by crossing one of the ceramic masses 81, 82, 83 which preheat them up to about 750°C; from here they pass into the chamber 62 where the burner heats them up to about 820°C, and are discharged after being mixed with the combustion gases of a further of the chambers through the respective ceramic mass which is thus brought to an average temperature of about 600°C.

The outlet temperature of the gas that once filtered from the organic products can be discharged into the atmosphere, and a large part of which can also be recycled in the roasting chamber 1 leading to a very considerable heat saving, is of between 350-400°C.

When the plant is in a full operating cycle, the temperature in the combustion chamber 62 stabilises at 780-820°C.

In the second half of each roasting cycle, when the formation of organic substances becomes considerable in its entity, the burner 9 of the filter 6 is switched off and the temperature of the ceramic mass is maintained thanks to the exothermic reaction of the oxidation of the gases produced by the roasting. If the gases are not sufficiently full of organic substances, and the exothermic reaction is not sufficient, the burner 9 is sporadically re-ignited.

After about 8 to 20 minutes, the roasting is complete, the drum 1 is emptied and filled for a new cycle.

Specific consumption of a plant of the first embodiment shown schematically in figure 1, for roasting a kilogram of coffee, has been observed to be 935 kJ, with a specific consumption of 0.025 Nm³ of methane.

The same plant, without the regenerative filter and operating under the same conditions used 1700kJ/Kg with a consumption of 0.048 Nm³/Kg; the energy saving achieved by the invention was 48%.

The invention is not limited to the above-described example, and variants and improvements may be brought to it without its forsaking the ambit of the following claims.

## Claims

1. A roasting plant for coffee, barley, cocoa and oil seed, generally comprising a roasting chamber(1) destined to contain a product to be roasted, a first combustion chamber (2) comprising a first burner (3) for generating and conveying a roasting gas flow into the roasting chamber (1); means for removing (4) discharge gases from the roasting chamber (1) comprising the roasting gases and gases emitted by the product during roasting; means for reducing (6) organic components present in the discharge gas, and means for conveying (7) the discharge gas into an outside atmosphere; a branch (12) being located between the means for reducing (6) the organic components present in the discharge gas and the means for conveying (7) the discharge gases into the outside atmosphere, which branch (12) conveys a part of the gas in outlet from the means for reducing (6) the organic components into the roasting chamber (1), **characterised in that** the means for reducing the organic components in the discharge gases comprise a second fuel burner (9) destined to bring the discharge gas to a temperature of above 800°C, and an insulated casing (60) in which a porous ceramic mass (8) made of ceramic material is arranged, which delimits internally of the casing (60) an upper zone (62) comprising the second burner (9) and a lower zone (61) comprising two separator walls (601, 602), which sub-divide the lower part into three separate chambers (A, B and C), each of which contains a portion of the ceramic mass (A, B and C); an inlet conduit (511, 512, 513) of the gases coming from the roasting chamber (1) enters each of the chambers (A, B and C) and an outlet conduit (611, 612, 613) also opens in each of the chambers (A, B and C), each of which outlet conduits and the inlet conduits comprises respective check valves (510, 520, 530 and 610, 620, 630) destined to selectively close the respective conduits such that the gas coming from one of the inlet conduits crosses the portion of ceramic mass of the respective chamber and exits from the outlet conduit of another chamber, having crossed the respective ceramic mass.

2. The plant of claim 1, **characterised in that** a first branch (122) is located between the means for reducing (6) the organic component present in the discharge gas and the means for conveying (7) the discharge gases into the atmosphere, which first branch (122) directly conveys a part of the gas in outlet from the means for reducing (6) the organic components into the roasting chamber (1).

3. The plant of claim 1, **characterised in that** a second branch (12, 121) is located between the means for reducing (6) the organic component present in the discharge gas and the means for conveying (7) the discharge gases into the atmosphere, which second branch (12, 122) conveys a part of the gas in outlet from the means for reducing (6) the organic components into the roasting chamber (1) via the combustion chamber (2).

4. The plant of claim 1, **characterised in that** the porous ceramic mass (8) exhibits a ratio between empty spaces and full spaces which is not greater than 140%, and a total mass expressed in kilograms of at least 5% of a number in m³/min expressing a flow rate of roasting gases.

5. The plant of claim 1, **characterised in that** the at least an outlet conduit (611, 612, 613) of the discharge gases and the combustion gases of the second burner flow together into a manifold (600) which comprises an aspirator (10) facilitating discharge of the gases.

6. The plant of claim 5, **characterised in that** a branch (12) is present downstream of the manifold (600) from which branch (12) derive a first conduit (121) flowing into the first combustion chamber (2), a second conduit (122) flowing into the roasting chamber (1), and a further conduit (11) communicating with the means for conveying (7) the discharge gases to the atmosphere, each of the conduits being provided with respective check valves for selective opening and closing thereof.

7. The plant of claim 1, **characterised in that** the conduits (511, 512, 513) for injection of the discharge gases of the roasting chamber derive from a single manifold (51) connected to the roasting chamber (1).

8. The plant of claim 7, **characterised in that** a ventilator (51) is located between the single manifold (51) and the roasting chamber (1), which ventilator (51) is destined to create a depression in the roasting chamber.

9. The plant of claim 8, **characterised in that** a cyclone separator (5) is located between the ventilator (41) and the single manifold (51).

10. The plant of claim 1, **characterised in that** it further comprises at least a temperature sensor (ST1) positioned at the outlet of the roasting chamber (1); at least a temperature sensor (ST2) located in the roasting chamber (1); at least a temperature sensor (ST4) located at the outlet of the means for reducing (6); at least a temperature sensor (ST5) located at the inlet of the means for conveying (7); at least a temperature sensor (ST6) located at the outlet of the combustion chamber (2); and at least a temperature sensor located in the casing of the means for reducing the organic products.

11. The plant of claim 10, **characterised in that** it further comprises at least three temperature sensors (STA, STB, STC) located respectively each in a portion of three independent portions (A, B, C) into which the second zone of the casing (61) is sub-divided (60).

12. The plant of claim 10, **characterised in that** it further comprises at least three temperature sensors (STA2, STB2, STC2) located in the first zone (62) of the casing (60), each of which sensors is located above one of the independent portions into which the ceramic mass (8) is sub-divided.

13. The plant of claim 5, **characterised in that** a further branch (65) is located downstream of the first zone (62) of the casing (60), which further branch (65) flows into the manifold (600) upstream of the aspirator (10) which conveys a part of the hot gases present in the first zone (61) into the manifold (600).

14. A roasting process for coffee, **characterised in that** it comprises following stages:
supplying a roasting chamber containing coffee in beans with discharge gas from a combustion chamber (2, 62) at a temperature of about 500°C;
maintaining the gas supplied to the roasting chamber at a temperature comprised between 500°C and 300°C for from 8 to 20 minutes in order gradually to bring the temperature of the coffee to between 200°C and 230°C;
conveying the gas exiting the roasting chamber at a temperature of 150°C-300°C to a treatment chamber of the roasting gases, provided with three separate chambers (A, B and C), in each of which a portion of a porous ceramic mass (8) is contained, for eliminating the organic substances by oxidation;
pre-heating the gas to a temperature of about 750°C by exchange with one of porous ceramic masses and thanks to an exothermic reaction to the oxidation of the organic substances;
bringing the gas to a temperature of at least 800°C by mixing with combustion gas;
conveying the gas through another of the chambers (A, B and C) and the respective ceramic mass, in part to the chimney (7) for discharge into the atmosphere and in part to the roasting chamber (1).

15. The process of claim 14, **characterised in that** before conveying the part of gas to the roasting chamber (1) it comprises a stage of heating the gas to a temperature comprised between 300 and 500°C.

16. The process of claim 15, **characterised in that** the stage of heating is realised by means of passage of the part of gas into the combustion chamber (2).

17. The process of claim 15, **characterised in that** the stage of heating is realised by means of injecting, into the part of gas, a further part of gas deriving from the combustion gas.

18. The process of claim 14, **characterised in that** between the roasting chamber (1) and the gas treatment chamber (6) the gases are subjected to a cyclone separation.

19. The process of claim 14, **characterised in that** the heated gases are mixed with fresh air before entering the roasting chamber (1).

## Patentansprüche

1. Röstanlage für Kaffee, Gerste, Kakao und Ölsamen, allgemein umfassend eine Röstkammer (1), die dazu vorgesehen ist, ein zu röstendes Produkt zu enthalten, eine erste Brennkammer (2), die einen ersten Brenner (3) zum Erzeugen und Leiten eines Röstgasstroms in die Röstkammer (1) umfasst; Mittel zum Abziehen (4) von Abgasen, welche die Röstgase und die vom Produkt während des Röstens emittierten Gase umfassen, aus der Röstkammer (1); Mittel zum Reduzieren (6) von im Abgas enthaltenen organischen Bestandteilen, und Mittel zum Leiten (7) des Abgases in eine äußere Atmosphäre; einen Zweig (12), der sich zwischen den Mitteln zum Reduzieren (6) der im Abgas enthaltenen organischen Bestandteile und den Mitteln zum Leiten (7) der Abgase in die äußere Atmosphäre befindet, wobei dieser Zweig (12) einen Teil des aus den Mitteln zum Reduzieren (6) der organischen Bestandteile austretenden Gases in die Röstkammer (1) leitet, **dadurch gekennzeichnet, dass** die Mittel zum Reduzieren der organischen Bestandteile in den Abgasen einen zweiten Brennstoffbrenner (9), der dazu vorgesehen ist, das Abgas auf eine Temperatur über 800°C zu bringen, und ein isoliertes Gehäuse (60) umfassen, in dem eine aus Keramikmaterial bestehende poröse Keramikmasse (8) angeordnet ist, die innerhalb des Gehäuses (60) einen oberen Bereich (62), der den zweiten Brenner (9) umfasst, und einen unteren Bereich (61) abgrenzt, der zwei Trennwände (601, 602) umfasst, die den unteren Teil in drei getrennte Kammern (A, B und C) unterteilen, von denen jede einen Abschnitt der Keramikmasse (A, B und C) enthält; wobei eine Einlassleitung (511, 512, 513) für die von der Röstkammer (1) kommenden Gase in jede der Kammern (A, B und C) einmündet und eine Auslassleitung (611, 612, 613) ebenfalls in jede der Kammern (A, B und C) mündet, wobei jede der Auslassleitungen und der Einlassleitungen jeweilige Absperrventile (510, 520, 530 und 610, 620, 630) umfasst, die dazu vorgesehen sind, die entsprechenden Leitungen selektiv zu schließen, so dass das von einer der Einlassleitungen kommende Gas den Abschnitt der Keramikmasse der entsprechenden Kammer durchströmt und aus der Auslassleitung einer anderen Kammer austritt, nachdem es die entsprechende Keramikmasse durchströmt hat.

2. Anlage nach Anspruch 1, **dadurch gekennzeichnet, dass** ein erster Zweig (122) zwischen den Mitteln zum Reduzieren (6) der im Abgas enthaltenen organischen Bestandteile und den Mitteln zum Leiten (7) der Abgase in die Atmosphäre gelegen ist, wobei dieser erste Zweig (122) einen Teil des aus den Mitteln zum Reduzieren (6) der organischen Bestandteile austretenden Gases direkt in die Röstkammer (1) leitet.

3. Anlage nach Anspruch 1, **dadurch gekennzeichnet, dass** ein zweiter Zweig (12, 121) zwischen den Mitteln zum Reduzieren (6) der im Abgas enthaltenen organischen Bestandteile und den Mitteln zum Leiten (7) der Abgase in die Atmosphäre gelegen ist, wobei dieser zweite Zweig (12, 122) einen Teil des aus den Mitteln zum Reduzieren (6) der organischen Bestandteile austretenden Gases über die Brennkammer (2) in die Röstkammer (1) leitet.

4. Anlage nach Anspruch 1, **dadurch gekennzeichnet, dass** die poröse Keramikmasse (8) ein Verhältnis zwischen leeren Räumen und gefüllten Räumen von nicht mehr als 140% und eine in Kilogramm ausgedrückte Gesamtmasse von mindestens 5% einer Zahl in m³/min aufweist, die eine Durchflussmenge der Röstgase darstellt.

5. Anlage nach Anspruch 1, **dadurch gekennzeichnet, dass** die mindestens eine Auslassleitung (611, 612, 613) der Abgase und der Verbrennungsgase des zweiten Brenners zusammen in eine Sammelleitung (600) strömen, die einen Saugapparat (10) zum Erleichtern der Abfuhr der Gase umfasst.

6. Anlage nach Anspruch 5, **dadurch gekennzeichnet, dass** sich stromabwärts der Sammelleitung (600) ein Zweig (12) befindet, wobei von diesem Zweig (12) eine erste Leitung (121), die in die erste Brennkammer (2) mündet, eine zweite Leitung (122), die in die Röstkammer (1) mündet, und eine weitere Leitung (11), die mit den Mitteln zum Leiten (7) der Abgase in die Atmosphäre verbunden ist, abgehen, wobei jede der Leitungen mit jeweiligen Absperrventilen zum selektiven Öffnen und Schließen derselben versehen ist.

7. Anlage nach Anspruch 1, **dadurch gekennzeichnet, dass** die Leitungen (511, 512, 513) zum Einblasen der Abgase der Röstkammer von einer einzigen Sammelleitung (51) abgehen, die mit der Röstkammer (1) verbunden ist.

8. Anlage nach Anspruch 7, **dadurch gekennzeichnet, dass** sich ein Ventilator (51) zwischen der einzigen Sammelleitung (51) und der Röstkammer (1) befindet, wobei der Ventilator (51) dazu vorgesehen ist, einen Unterdruck in der Röstkammer zu erzeugen.

9. Anlage nach Anspruch 8, **dadurch gekennzeichnet, dass** sich ein Fliehkraftabscheider (5) zwischen dem Ventilator (41) und der einzigen Sammelleitung (51) befindet.

10. Anlage nach Anspruch 1, **dadurch gekennzeichnet, dass** sie ferner mindestens einen Temperatursensor (ST1), der am Auslass der Röstkammer (1) angeordnet ist, mindestens einen Temperatursensor (ST2), der sich in der Röstkammer (1) befindet, mindestens einen Temperatursensor (ST4), der sich am Auslass der Mittel zum Reduzieren (6) befindet, mindestens einen Temperatursensor (ST5), der sich am Einlass der Mittel zum Leiten (7) befindet, mindestens einen Temperatursensor (ST6), der sich am Auslass der Brennkammer (2) befindet, und mindestens einen Temperatursensor, der sich im Gehäuse der Mittel zum Reduzieren der organischen Produkte befindet, umfasst.

11. Anlage nach Anspruch 10, **dadurch gekennzeichnet, dass** sie ferner mindestens drei Temperatursensoren (STA, STB, STC) umfasst, die sich jeweils in einem Abschnitt von drei unabhängigen Abschnitten (A, B, C) befinden, in die der zweite Bereich des Gehäuses (61) unterteilt ist (60).

12. Anlage nach Anspruch 10, **dadurch gekennzeichnet, dass** sie ferner mindestens drei Temperatursensoren (STA2, STB2, STC2) umfasst, die sich in dem ersten Bereich (62) des Gehäuses (60) befinden, wobei sich jeder der Sensoren über einem der unabhängigen Abschnitte befindet, in die die Keramikmasse (8) unterteilt ist.

13. Anlage nach Anspruch 5, **dadurch gekennzeichnet, dass** ein weiterer Zweig (65) stromabwärts des ersten Bereichs (62) des Gehäuses (60) gelegen ist, wobei dieser weitere Zweig (65) in die Sammelleitung (600) stromaufwärts des Saugapparats (10) mündet, der einen Teil des im ersten Bereich (61) befindlichen heißen Gases in die Sammelleitung (600) fördert.

14. Ein Röstverfahren für Kaffee, **dadurch gekennzeichnet, dass** es die folgenden Phasen umfasst:
Beschicken einer Kaffee in Bohnenform enthaltenden Röstkammer mit Abgas von einer Brennkammer (2, 62) bei einer Temperatur von ungefähr 500°C;
Halten des der Röstkammer zugeführten Gases auf einer Temperatur zwischen 500°C und 300°C für 8 bis 20 Minuten, um die Temperatur des Kaffees graduell auf 200°C bis 230°C zu bringen;
Leiten des aus der Röstkammer mit einer Temperatur von 150°C bis 300°C austretenden Gases zu einer Behandlungskammer für die Röstgase, die mit drei getrennten Kammern (A, B und C) versehen ist, in jeder von denen ein Abschnitt einer porösen Keramikmasse (8) enthalten ist, um die organischen Stoffe durch Oxidation zu eliminieren;
Vorheizen des Gases auf eine Temperatur von ungefähr 750°C durch Austausch mit einer der porösen Keramikmassen und dank einer exothermen Reaktion auf die Oxidation der organischen Stoffe;
Erhöhen der Temperatur des Gases auf mindestens 800°C durch Mischen mit Verbrennungsgas; Leiten des Gases durch eine andere der Kammern (A, B und C) und die jeweilige Keramikmasse teils zum Schornstein (7) zum Abführen in die Atmosphäre und teils in die Röstkammer (1).

15. Verfahren nach Anspruch 14, **dadurch gekennzeichnet, dass** es vor dem Leiten der Gasteilmenge zur Röstkammer (1) eine Phase des Erhitzens des Gases auf eine Temperatur zwischen 300°C und 500°C umfasst.

16. Verfahren nach Anspruch 15, **dadurch gekennzeichnet, dass** die Phase des Erhitzens mittels der Passage der Gasteilmenge in der Brennkammer (2) durchgeführt wird.

17. Verfahren nach Anspruch 15, **dadurch gekennzeichnet, dass** die Phase des Erhitzens mittels Einblasen in die Gasteilmenge einer weiteren, vom Verbrennungsgas stammenden Gasteilmenge durchgeführt wird.

18. Verfahren nach Anspruch 14, **dadurch gekennzeichnet, dass** die Gase zwischen der Röstkammer (1) und der Gasbehandlungskammer (6) einer Fliehkraftabscheidung unterzogen werden.

19. Verfahren nach Anspruch 14, **dadurch gekennzeichnet, dass** die erhitzten Gase mit Frischluft gemischt werden, bevor sie in die Röstkammer (1) eintreten.

## Revendications

1. Installation de torréfaction pour le café, l'orge, le cacao et les graines oléagineuses, comprenant en général une chambre de torréfaction (1) destinée à contenir un produit à torréfier, une première chambre de combustion (2) comprenant un premier brûleur (3) pour générer et transporter un flux de gaz de torréfaction dans la chambre de torréfaction (1) ; un moyen d'élimination (4) des gaz d'échappement de la chambre de torréfaction (1) comprenant les gaz de torréfaction et des gaz émis par le produit durant la torréfaction ; un moyen de réduction (6) des composants organiques présents dans les gaz d'échappement, et un moyen de transfert (7) des gaz d'échappement dans une atmosphère externe ; une ramification (12) positionnée entre le moyen de réduction (6) des composants organiques présents dans les gaz d'échappement et le moyen de transfert (7) des gaz d'échappement dans l'atmosphère externe, dans laquelle ladite ramification (12) transfère une partie des gaz de l'échappement depuis le moyen de réduction (6) des composants organiques jusque dans la chambre de torréfaction (1), **caractérisée en ce que** le moyen de réduction des composants organiques présents dans les gaz d'échappement comprend un deuxième brûleur de carburant (9) destiné à amener les gaz d'échappement à une température supérieure à 800 °C, et un carter isolé (60) dans lequel une masse céramique poreuse (8) constituée en un matériau céramique est agencée, qui délimite à l'intérieur du carter (60) une zone supérieure (62) comprenant le deuxième brûleur (9) et une zone inférieure (61) comprenant deux cloisons de séparation (601, 602), qui subdivisent la partie inférieure en trois chambres séparées (A, B et C) contenant chacune une partie de la masse céramique (A, B et C) ; **en ce qu'**un conduit d'admission (511, 512, 513) des gaz provenant de la chambre de torréfaction (1) entre dans chacune des chambres (A, B et C) et un conduit d'échappement (611, 612, 613) s'ouvre également dans chacune des chambres (A, B et C), chacun desdits conduits d'échappement et d'admission comprend des clapets anti-retour respectifs (510, 520, 530 et 610, 620, 630) destinés à fermer sélectivement les conduits respectifs de telle sorte que les gaz provenant de l'un des conduits d'admission traversent la partie de masse céramique de la chambre respective et sortent du conduit d'échappement d'une autre chambre après avoir traversé la masse céramique respective.

2. Installation selon la revendication 1, **caractérisée en ce que** la première ramification (122) est positionnée entre le moyen de réduction (6) des composants organiques présents dans les gaz d'échappement et le moyen de transfert (7) des gaz d'échappement à l'atmosphère, dans laquelle ladite première ramification (122) transfère directement une partie des gaz de l'échappement depuis le moyen de réduction (6) des composants organiques jusque dans la chambre de torréfaction (1).

3. Installation selon la revendication 1, **caractérisée en ce que** la deuxième ramification (12, 121) est positionnée entre le moyen de réduction (6) des composants organiques présents dans les gaz d'échappement et le moyen de transfert (7) des gaz d'échappement à l'atmosphère, ladite deuxième ramification (12, 122) transférant une partie des gaz de l'échappement depuis le moyen de réduction (6) des composants organiques jusque dans la chambre de torréfaction (1) via la chambre de combustion (2).

4. Installation selon la revendication 1, **caractérisée en ce que** la masse céramique poreuse (8) présente un ratio entre les espaces vides et les espaces pleins inférieur ou égal à 140 %, et une masse totale exprimée en kilogrammes supérieure ou égale à 5 % du débit des gaz de torréfaction exprimé en m³/min.

5. Installation selon la revendication 1, **caractérisée en ce que** ledit au moins un conduit d'échappement (611, 612, 613) des gaz d'échappement et des gaz de combustion du deuxième brûleur s'écoulent ensemble dans un collecteur (600) qui comprend un aspirateur (10) facilitant l'échappement des gaz.

6. Installation selon la revendication 5, **caractérisée en ce qu'**une ramification (12) est présente en aval du collecteur (600), ladite ramification (12) s'embranchant avec un premier conduit (121) qui aboutit dans la première chambre de combustion (2), un deuxième conduit (122) qui aboutit dans la chambre de torréfaction (1), et un autre conduit (11) qui communique avec le moyen de transfert (7) des gaz d'échappement à l'atmosphère, chacun desdits conduits étant pourvu de clapets anti-retour respectifs pour leur ouverture et fermeture sélectives.

7. Installation selon la revendication 1, **caractérisée en ce que** les conduits (511, 512, 513) pour l'injection des gaz d'échappement de la chambre de torréfaction s'embranchent depuis un collecteur unique (51) connecté à la chambre de torréfaction (1).

8. Installation selon la revendication 7, **caractérisée en ce qu'**un ventilateur (51) est positionné entre le collecteur unique (51) et la chambre de torréfaction (1), ledit ventilateur (51) étant destiné à créer une dépression dans la chambre de torréfaction.

9. Installation selon la revendication 8, **caractérisée en ce qu'**un séparateur à cyclone (5) est positionné entre le ventilateur (41) et le collecteur unique (51).

10. Installation selon la revendication 1, **caractérisée en ce qu'**elle comprend en outre au moins un capteur de température (ST1) positionné à l'échappement de la chambre de torréfaction (1) ; au moins un capteur de température (ST2) positionné dans la chambre de torréfaction (1) ; au moins un capteur de température (ST4) positionné à l'échappement du moyen de réduction (6) ; au moins un capteur de température (ST5) positionné à l'admission du moyen de transfert (7) ; au moins un capteur de température (ST6) positionné à l'échappement de la chambre de combustion (2) ; et au moins un capteur de température positionné dans le carter du moyen de réduction des produits organiques.

11. Installation selon la revendication 10, **caractérisée en ce qu'**elle comprend en outre au moins trois capteurs de température (STA, STB, STC) positionnés chacun respectivement dans une partie parmi trois parties indépendantes (A, B, C) dans lesquelles la deuxième zone du carter (61) est subdivisée (60).

12. Installation selon la revendication 10, **caractérisée en ce qu'**elle comprend en outre au moins trois capteurs de température (STA2, STB2, STC2) positionnés dans la première zone (62) du carter (60), chacun desdits capteurs étant positionné au-dessus d'une des parties indépendantes dans lesquelles la masse céramique (8) est subdivisée.

13. Installation selon la revendication 5, **caractérisée en ce qu'**une autre ramification (65) est positionnée en aval de la première zone (62) du carter (60), ladite autre ramification (65) aboutissant dans le collecteur (600) en amont de l'aspirateur (10) qui transfère une partie des gaz chauds présents dans la première zone (61) jusque dans le collecteur (600).

14. Procédé de torréfaction du café, **caractérisé en ce qu'**il comprend les étapes suivantes :
alimentation de gaz d'échappement provenant d'une chambre de combustion (2, 62) à une température d'environ 500 °C dans une chambre de torréfaction contenant du café en grains ;
maintien des gaz alimentés dans la chambre de torréfaction à une température comprise entre 500 °C et 300 °C durant 8 à 20 minutes afin d'amener graduellement la température du café entre 200 °C et 230 °C ;
transfert des gaz sortant de la chambre de torréfaction à une température de 150 °C à 300 °C jusqu'à une chambre de traitement des gaz de torréfaction pourvue de trois chambres séparées (A, B et C), chacune de celles-ci contenant une partie d'une masse céramique poreuse (8), afin d'éliminer les substances organiques par oxydation ;
préchauffage des gaz à une température d'environ 750 °C par échange avec l'une des masses céramiques poreuses et grâce à une réaction exothermique d'oxydation des substances organiques ;
chauffage des gaz à une température d'au moins 800 °C par mélange aux gaz de combustion ;
transfert des gaz à travers une autre desdites chambres (A, B et C) et à travers la masse céramique respective, partiellement vers la cheminée (7) d'échappement à l'atmosphère et partiellement vers la chambre de torréfaction (1).

15. Processus selon la revendication 14, **caractérisé en ce que**, avant le transfert de ladite partie des gaz vers la chambre de torréfaction (1), il comprend une étape de chauffage des gaz jusqu'à une température comprise entre 300 °C et 500 °C.

16. Processus selon la revendication 15, **caractérisé en ce que** l'étape de chauffage est réalisée à l'aide du passage de ladite partie des gaz dans la chambre de combustion (2).

17. Processus selon la revendication 15, **caractérisé en ce que** l'étape de chauffage est réalisée à l'aide de l'injection dans ladite partie des gaz d'une autre partie dérivée des gaz de combustion.

18. Processus selon la revendication 14, **caractérisé en ce que**, entre la chambre de torréfaction (1) et la chambre de traitement des gaz (6), les gaz sont soumis à une séparation par cyclone.

19. Processus selon la revendication 14, **caractérisé en ce que** les gaz chauffés sont mélangés à de l'air frais avant d'entrer dans la chambre de torréfaction (1).
